# EUROPEAN PATENT SPECIFICATION

(11) **EP 0 468 111 B1**
(45) Date of publication and mention of the grant of the patent: **18.10.1995**
(21) Application number: 90308108.1
(22) Date of filing: 24.07.1990
(51) Int. Cl.: B23D 59/00, B23D 51/02, B23Q 17/09

(54) **Jig saw having sensing means responsive to condition of operating member**
Stichsäge mit Zustandsdetektiervorrichtung für das Werkzeug
Scie sauteuse ayant un détecteur de la condition de l'outil

(43) Date of publication of application: 29.01.1992
(73) Proprietor: ROBERT BOSCH GMBH, 70442 Stuttgart (DE)
(72) Inventor: Humberstone, Victor The Technology Partnership Ltd, Royston Hertfordshire SG8 6EE (GB); Miller, Anne Tregoning The Tech. Partnership Ltd, Royston Hertfordshire SG8 8EE (GB)

(56) References cited:
- EP-A- 0 182 986
- CH-A- 335 228
- US-A- 2 754 567
- US-A- 3 566 731
- PATENT ABSTRACTS OF JAPAN, vol. 11, no. 146 (M-587)[2593], 13th May 1987; & JP-A-61 279 422 (AMADA CO. LTD) 10-12-1986

## Description

The present invention relates to a jig saw having a housing and an operating member projecting from the housing.

A problem encountered by operators of jigsaws and similar hand tools is that curvature of the blade or operating member, is not easily detected, and therefore it is difficult for the operator to control the tool accurately, for example when cutting straight lines. This problem is typically caused by the operator not holding the tool correctly. It also commonly occurs when the blade teeth are uneven due to faulty manufacture or wear. Sawdust tends to build up on one side of the blade and cause the blade to be deflected with respect to the tool housing. The result may be that the cut produced is not exactly perpendicular to the surface of the material being cut, but this is not usually visible to the operator. Non-uniformities in the material being cut, e.g., knots in timber, can also cause blade curvature.

The US-patent 3,566,731 discloses a bandsaw with a support and drive mechanism for supporting the saw in a substantially upright position. There are provided novel blade tilting members for tilting a portion of an endless saw blade between spaced apart portions of a housing having a driving member and a driven member therein respectively whereby the bandsaw will cut an elongate member intermediate its ends. The blade cuts substantially transverse to the longitudinal axis of the member being cut while the bandsaw is supported at a substantial angle with the longitudinal axis of the member being cut whereby a relatively large member may be cut. Further, there are provided engining means for the blade.

In JP 61-279422 (A) there is disclosed a bandsaw having a load detector for measuring the reaction produced by a bending force of a band saw blade. The maximum cut bend value can be easily calculated from the detected value. The cut bend amount can be accurately foreseen and defective cut can be prevented.

The present invention provides a jig saw with means for detecting curvature of the operating member. Having detected curvature corrective action may be taken, either by the operator or automatically.

There are numerous possible ways in which the curvature of the operating member can be detected. For example, in a jig saw in which the operating member is reciprocated it might be possible to detect deviations of the operating member from the straight "up-down" path, for example using optical sensors in the tool housing.

In the preferred embodiment of the present invention, curvature of the blade is detected by measuring a reaction force resulting from the curvature. For example, in a reciprocating blade type jigsaw, the blade is typically attached to a plunger supported by bearings and curvature of the blade with respect to the housing will cause reaction forces at the plunger bearings, any of which can be measured.

An embodiment of the invention will now be described by way of example only and with reference to the accompanying drawings in which:
Figure 1 is an exploded perspective view of a front portion of the tool housing and the components of the blade curvature detection means;
Figure 2 is a vertical cross section through the tool viewed from the back, (the components in figure 2 are reversed as compared to figure 1);

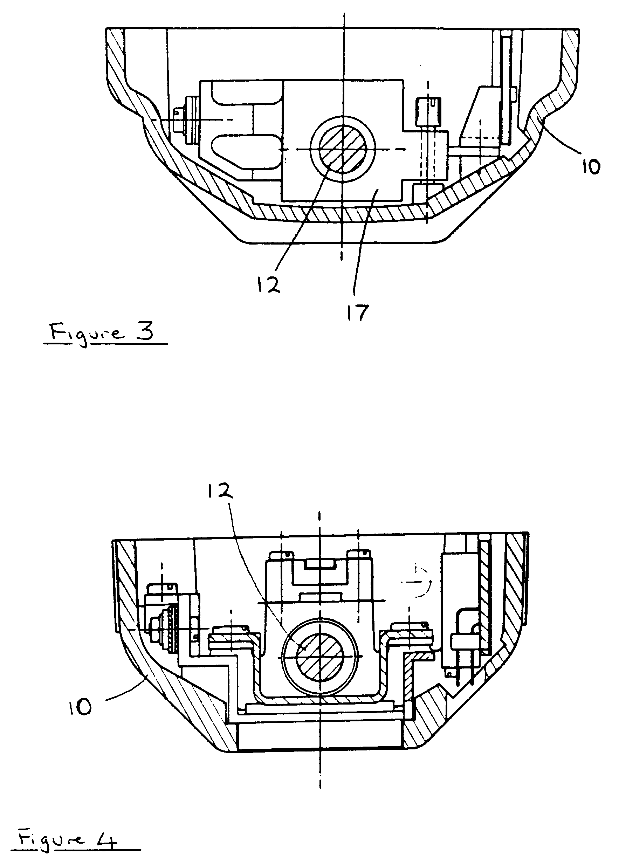

Figure 3 is a horizontal cross section along the line III-III of Figure 2;

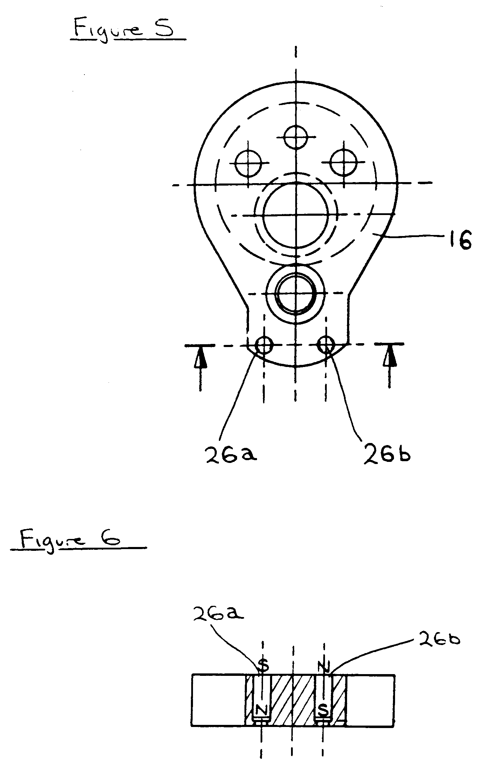

Figure 4 is a horizontal cross section along the line IV-IV of Figure 2;
Figure 5 is a front elevation of the drive arm via which the blade of the tool is reciprocated; and
Figure 6 is a cross section through the drive arm along line A-A of Figure 5.

The illustrated embodiment of the invention is a jigsaw of the reciprocating blade type comprising a housing 10 in which is housed a motor (not shown) and mechanical means for moving a blade 11 up and down within the housing. The mechanism for reciprocating the blade is conventional and will not be described.

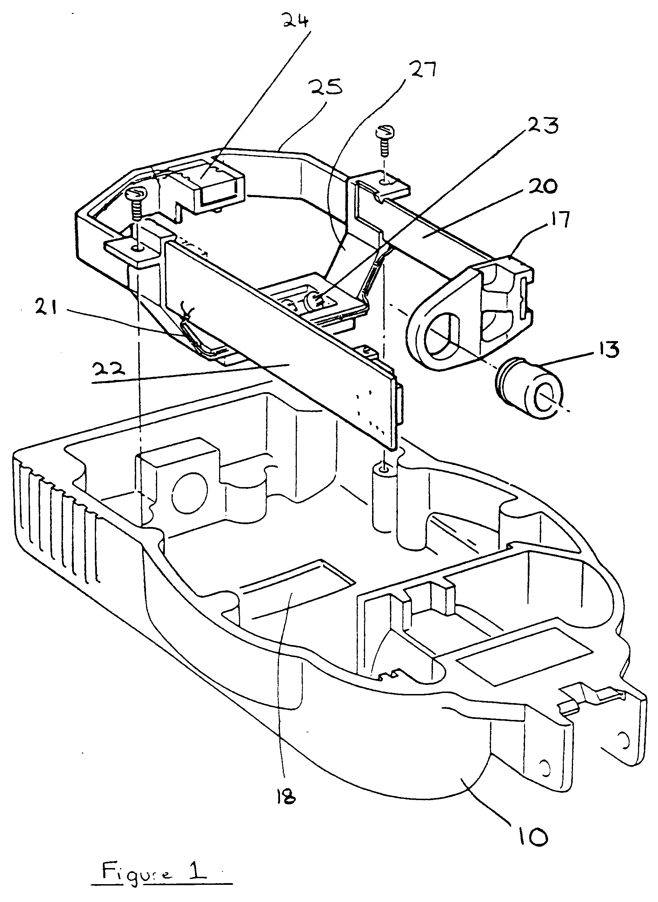

The front portion of the housing, illustrated in Figure 1, is removable and accommodates the components of the blade curvature detection means to be described below.

The blade 11 is secured to a plunger 12 which is guided for reciprocal movement within the housing. The plunger 12 is supported by bearings 13, namely lower plunger bearing 13 and upper plunger bearing 14. The lower end of the blade is guided by a support roller 15. The plunger is driven via a drive arm 16, shown in Figure 5, connected to the motor.

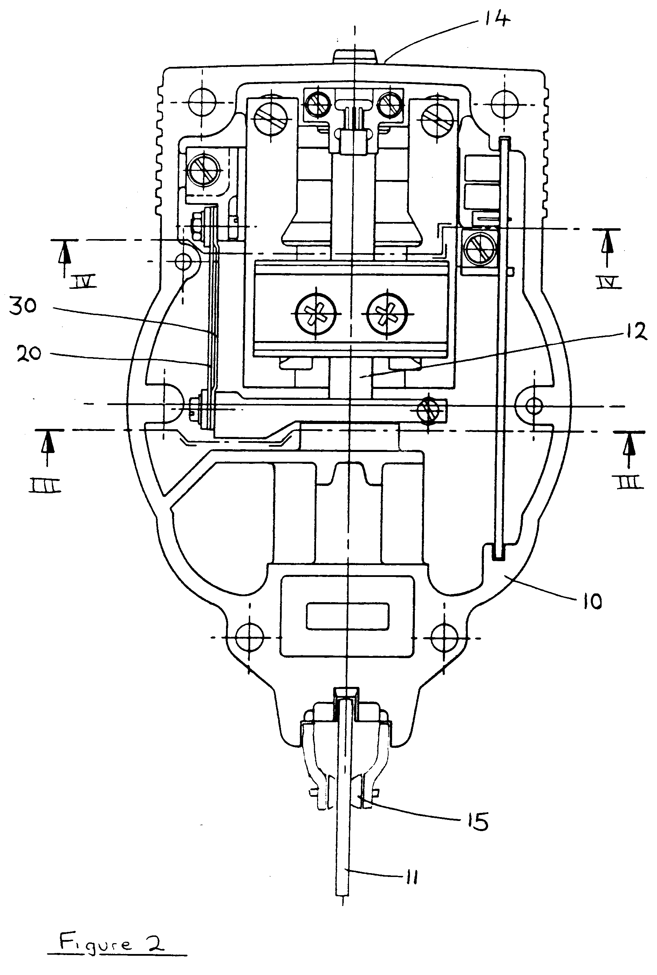

The illustrated jig saw is provided with means for detecting curvature of the blade to the right or left as viewed in Figure 2. The amount of curvature of the blade can be deduced from the resulting reaction forces within the tool, for example on the plunger bearings 13 or the support roller 15.

In this embodiment of the invention, blade curvature is deduced from the resulting reaction force at the bottom plunger bearing. In order to achieve this it is important that the play in the support roller should be small. The reason for this is as follows: An initial deflection of the blade to the left as viewed in Figure 1 will produce a reaction force to the right at the bottom plunger bearing. Once the blade has been deflected far enough to contact the support roller, a reaction force to the right will be produced at the support roller and the reaction force at the bottom plunger bearing will be to the left, i.e. it will change direction. The play in the support roller should be small enough that this change in direction takes place before an appreciable deflection of the blade (i.e. one which should be indicated to the operator) has taken place.

In the preferred embodiment of the invention is the clearance between the lower bearing 13 and the plunger 12 so that side loads do not affect the strain plate unless the blade is actually curved between the support roller and the bearing.

In a tool of the reciprocating blade type, it is desirable to ensure that the influence of the drive forces reciprocating the blade do not influence the measurement. In the illustrated tool, rotary motion of a drive arm 16, in a plane parallel to the crass-section of Figure 2, is translated to reciprocating motion of the blade 11, by conventional means, not shown. It will be appreciated that this drive mechanism can exert forces on components such as the plunger bearings and the support roller in the sideways directions as viewed in Figure 2, i.e. the same direction as any reaction forces to be measured.

The influence of drive forces can be removed by mechanically isolating the plunger so that any forces on the plunger bearing are solely due to blade curvature. Alternatively the measurement of reaction force can be carried out only when the plunger is at the top dead centre (TDC) or bottom dead centre (BDC) position at which there are no sideways forces from the drive mechanism which would influence the measured value. This latter approach is used in this embodiment of the invention.

It is preferred to measure curvature of the blade 11 at the TDC position of the plunger at which point the clearances in the support roller are less significant than at BDC.

A strain plate 20 is used to measure the force on the bottom plunger bearing. This may be of conventional design such as a commonly available steel substrate strain plate. The strain plate 20 is attached to the bottom plunger bearing via a bush/arm moulding 17 in which the bearing 13 is located. A certain radial clearance between the bearing 13 and the tool housing is necessary eg. 0.25mm in the illustrated arrangement, to ensure that forces on the plunger bearing are freely transmitted to the bush/arm moulding and hence the strain plate, but that excessive forces cannot be transmitted to the strain plate.

One end of the strain plate is attached to the bush/arm moulding 17 and the other end is fixed to the LED moulding 27 and hence the housing whereby forces on the plunger bearing 13 will strain the strain plate 20. Signals from gauges on the strain plate are connected via leads 21 to circuitry on a printed circuit board 22. Deflections of the blade are indicated to the operator via suitable LEDS 23 which are visible through a hole 18 in the housing 10. The electronic circuitry may be conventional and will not be described in detail herein. A latching Hall switch 24 is included for switching the circuitry on and off. The Hall switch is operated by magnets 26a and 26b of opposite polarity mounted in the drive arm 16 as illustrated in Figure 5. During operation, the first magnet passes the Hall switch as the plunger approaches the TDC position to switch on the measuring circuitry and the second magnet passes the Hall switch as the plunger begins to travel downwards again to switch the circuitry off.

The Hall switch 24, PCB 22, strain plate 20 and support 27 for the LED's may be mounted on a yoke 25 designed to fit in the front removable part of the housing 10 for convenience during assembly.

The strain on the strain plate could in theory be measured continuously without sampling. The resulting measurements would be less sensitive and would be affected more strongly by the drive forces and the feed force from the operator.

Bearing deflections (and hence strains in the strain plate) are preferably limited by maintaining a clearance of about 0.25mm between the bearing 13 and the housing 10.

During operation of the illustrated jig saw the temperature within the housing, especially in the region of the plunger is high. It will be appreciated that a temperature differential between the ends of the strain plate 20 may affect the measurement of strain. To ensure that this does not occur a thermal shunt is provided in the form of a copper strip 30 extending parallel to the strain plate 20. Copper is chosen because is has a far higher thermal conductivity than steel but it has a very low stiffness in comparison to steel. Therefore, it can serve to equalise the temperature between the ends of the strain plate with a negligible effect on the strain produced.

The circuitry on the PCB preferably includes a potentiometer for calibration to ensure that the LEDs indicate zero deflection when there is no curvature of the blade. The potentiometer may be positioned within the LED moulding alongside the LEDs so that it is accessible from the outside for adjustment without having to dismantle the housing 10. The circuitry should desirably also include means to compensate for temperature variations within the housing.

The LED display may simply comprise a row of point lights, possibly of varying colours arranged such that the centre light is illuminated when the blade is straight and lights to the left of centre are illuminated in turn as the blade curves to the right and blades to the left of centre are illuminated in turn as the blade curves to the right. A label is preferably provided on the jig saw to enable the operator to deduce from the light signals how to apply pressure on the tool to bring the blade straight. Thus if the blade curves to the right the operator must apply pressure to the right to bring the blade straight.

It will be appreciated that the blade curvature detection means described above is sensitive to the use of blades which are curved at the outset (permanently bent) as well as to deviations of the blade from its desired 'straight' position during use.

Instead of the operator having to compensate for detected blade curvature, it is possible to correct for the effects of blade curvature by rotating the plunger 12. Thus, a jig saw according to this invention may additionally be provided with means for correcting the effect of blade curvature such as an auxiliary motor which rotates the plunger in response to signals indicating that the blade is curved.

A conventional jig saw may be easily provided with means for measuring blade curvature of the type described above, with only minor modifications.

A jigsaw constructed in accordance with the present invention has several advantages including the following:
By providing the operator with information on blade curvature, the operator is able to cut more accurately, particularly straight cuts.

A jigsaw according to this invention has proved particularly useful for cutting long curves, thus avoiding expensive mistakes in kitchen worktops for example.

Skilled operators cut slowly and lightly to achieve a straight cut. Using a jigsaw according to this invention it is possible to cut much faster with confidence.

Increasing the thickness of the blade increases the sensitivity of the system. A jigsaw according to this invention could therefore be provided with a special blade for accurate work which would be thicker, and possibly have side cutting teeth to enable the blade to cut more freely.

## Claims

1. A jig saw comprising an operating member (11) projecting from a housing (10) including means for driving the operating member (11) to undergo reciprocating movement with respect to the housing (10), characterized in that the jig saw includes means for detecting curvature of the operating member (11) arranged to detect a reaction force generated in response to said curvature on a bearing (13) supporting the operating member (11), in which the means for detecting curvature of the operating member (11) are switched on only when the operating member (11) is at or near to the top dead centre position of its reciprocating movement or the means for detecting curvature of the operating member (11) are switched on only when the operating member (11) is at the bottom dead centre of its reciprocating movement.

2. A jig saw as claimed in claim 1 wherein the means for detecting curvature of the operating member (11) are arranged to detect a reaction force generated in response to said curvature.

3. A jig saw as claimed in claim 2 in which the means for detecting curvature of the operating member (11) are arranged to detect a reaction force on a bearing (13) supporting the operating member (11).

4. A jig saw as claimed in claim 3 in which the means for detecting curvature of the operating member (11) comprise a strain gauge (20) coupled to the bearing (13).

5. A jig saw as claimed in claim 1 in which the detecting means are switched on and off by a Hall switch (24) mounted on the housing (10) actuated by magnets (26a, 26b) associated with the driving means.

6. A jig saw as claimed in claim 1 in which the operating member (11) includes a plunger (12) supported within the housing (10) by means of bearings and curvature of the projecting part of the operating member (11) is detected from the resulting reaction force in the bearing (13) nearest to said projecting part.

7. A jig saw as claimed in any preceding claim further including means (23) for indicating to the operator deflections of the operating member (11) with respect to the housing (10).

## Patentansprüche

1. Stichsäge mit einem Arbeitsteil (11), das an einem Gehäuse (10) übersteht, einschließlich Mitteln zum Antreiben des Arbeitsteils (11), so daß dieses eine oszillierende Bewegung bezüglich des Gehäuses (10) ausführt, dadurch gekennzeichnet, daß die Stichsäge Mittel zum Erfassen der Krümmung des Arbeitsteils (11) besitzt, die so eingerichtet sind, daß eine Reaktionskraft erfaßt wird, die in Reaktion auf die erwähnte Krümmung an einem Lager (13) für das Arbeitsteil (11) erzeugt wird, wobei die Mittel zum Erfassen der Krümmung des Arbeitsteils (11) nur eingeschaltet werden, wenn das Arbeitsteil (11) in oder in der Nähe der oberen Totpunktlage seiner Oszillationsbewegung steht oder die Mittel zum Erfassen der Krümmung des Arbeitsteils (11) nur eingeschaltet werden, wenn das Arbeitsteil (11) im unteren Totpunkt seiner Oszillationsbewegung ist.

2. Stichsäge nach Anspruch 1 dadurch gekennzeichnet, daß die Mittel zum Erfassen der Krümmung des Arbeitsteils (11) so eingerichtet sind, daß eine auf die erwähnte Krümmung hin erzeugte Reaktionskraft erfaßt wird.

3. Stichsäge nach Anspruch 2 dadurch gekennzeichnet, daß die Mittel zum Erfassen der Krümmung des Arbeitsteils (11) so eingerichtet sind, daß eine Reaktionskraft an einem das Arbeitsteil (11) stützenden Lager (13) erfaßt wird.

4. Stichsäge nach Anspruch 3 dadurch gekennzeichnet, daß die Mittel zum Erfassen der Krümmung des Arbeitsteils (11) aus einem an das Lager (13) gekoppelten Dehnungsmesser (20) bestehen.

5. Stichsäge nach Anspruch 1 dadurch gekennzeichnet, daß die Erfassungsmittel durch einen Hall-Schalter (24) ein- und ausgeschaltet werden, der an dem Gehäuse (10) installiert ist und durch mit den Antriebsmitteln verbundene Magnete (26a, 26b) betätigt wird.

6. Stichsäge nach Anspruch 1 dadurch gekennzeichnet, daß das Arbeitsteil (11) einen im Gehäuse (10) mit Lagern abgestützten Kolben (12) beinhaltet, und die Krümmung des überstehenden Teils des Arbeitsteils (11) aus der resultierenden Reaktionskraft im Lager (13), das dem erwähnten überstehenden Teil am nächsten liegt, erfaßt wird.

7. Stichsäge nach einem der obigen Ansprüche, des weiteren beinhaltend Mittel (23) zum Anzeigen von Durchbiegungen des Arbeitsteils (11) bezüglich des Gehäuses (10) für den Bediener.

## Revendications

1. Scie sauteuse comprenant un élément de fonctionnement (11) sortant d'un carter (10), comprenant des moyens pour entraîner l'élément de fonctionnement (11) de façon qu'il effectue un mouvement alternatif par rapport au carter (10), caractérisé en ce que la scie sauteuse comprend des moyens pour détecter une courbure de l'élément de fonctionnement (11), ces moyens étant disposés pour détecter une force de réaction générée en réponse à cette courbure sur un palier (13) supportant l'élément de fonctionnement (11), les moyens de détection de la courbure de l'élément de fonctionnement (11) n'étant mis en marche que lorsque l'élément de fonctionnement (11) se trouve au niveau ou au voisinage de la position de point mort haut de son mouvement alternatif, ou les moyens de détection de la courbure de l'élément de fonctionnement (11) n'étant mis en marche que lorsque l'élément de fonctionnement (11) se trouve au point mort bas de son mouvement alternatif.

2. Scie sauteuse selon la revendication 1, caractérisée en ce que les moyens pour détecter la courbure de l'élément de fonctionnement (11) sont disposés pour détecter une force de réaction générée en réponse à cette courbure.

3. Scie sauteuse selon la revendication 2, caractérisée en ce que les moyens pour détecter la courbure de l'élément de fonctionnement (11) sont disposés pour détecter une force de réaction sur un palier (13) supportant l'élément de fonctionnement (11).

4. Scie sauteuse selon la revendication 3, caractérisée en ce que les moyens pour détecter la courbure de l'élément de fonctionnement (11) comprennent une jauge de contrainte (20) couplée au palier (13).

5. Scie sauteuse selon la revendication 1, caractérisée en ce que les moyens de détection sont allumés et coupés par un commutateur à effet Hall (24) monté sur le carter (10) et actionné par des aimants (26a, 26b) associés aux moyens d'entraînement.

6. Scie sauteuse selon la revendication 1, caractérisée en ce que l'élément de fonctionnement (11) comprend un plongeur (12) supporté à l'intérieur du carter (10) par des paliers, et en ce que la courbure de la partie sortante de l'élément de fonctionnement (11) est détectée à partir de la force de réaction résultante dans le palier (13) le plus voisin de la partie sortante.

7. Scie sauteuse selon l'une quelconque des revendications précédentes, caractérisée en ce qu'elle comprend en outre des moyens (23) pour indiquer à l'opérateur des déviations de l'élément de fonctionnement (11) par rapport au carter (10).
